# EUROPÄISCHE PATENTSCHRIFT

(11) **EP 0 580 887 B1**
(45) Veröffentlichungstag und Bekanntmachung des Hinweises auf die Patenterteilung: **04.03.1998**
(21) Anmeldenummer: 92112992.0
(22) Anmeldetag: 30.07.1992
(51) Int. Cl.: E02D 5/74, E04G 21/12

(54) **Verfahren zur Herstellung von Litzenankern und zu deren Transport zur Baustelle sowie hierzu geeignete Vorrichtung**
Method for assembling stranded anchors and transporting them to the construction site, and apparatus for carrying out the method
Procédé pour la construction et le transport au chantier d'un ancrage toronné, et dispositif pour réaliser le procédé

(43) Veröffentlichungstag der Anmeldung: 02.02.1994
(73) Patentinhaber: Philipp Holzmann AG, 60329 Frankfurt (DE)
(72) Erfinder: Haupt, Manfred, Dr.-Ing., D-31675 Bückeburg (DE)
(74) Vertreter: Schubert, Siegmar, Dipl.-Ing.

(56) Entgegenhaltungen:
- DE-A- 1 811 218
- FR-A- 2 597 899
- GB-A- 1 137 898
- GB-A- 1 463 319
- GB-A- 2 182 694

## Beschreibung

Die Erfindung betrifft ein Verfahren zur Herstellung von Litzenankern und zu deren Transport zur Baustelle nach dem Oberbegriff des Anspruchs 13 sowie eine hierzu geeignete Vorrichtung nach dem Oberbegriff des Anspruchs 1.

Nach dem aus der Praxis bekannten Stand der Technik werden auf Haspeln angelieferte, PE-ummantelte Litzen nach Freilegen und Entfetten einer Krafteinleitungsstrecke bzw. Verankerungsstrecke in einem von der Baustelle entfernten Werk oder in einer Feldfabrik gebündelt, mit Abstandhaltern versehen und mit Hüllrohren überzogen. Nach dem Einführen der Litzenanker in ein Bohrloch wird zunächst die Verankerungsstrecke bzw. Krafteinleitungsstrecke innerhalb und außerhalb des Hüllrohres und anschließend eine Freispielstrecke mit Zementsuspension verpreßt. - Es treten jedoch insbesondere bei größeren derartig hergestellten Litzenankern Schwierigkeiten auf, wenn das im Hüllrohr befindliche Litzenbündel in vertikale Bohrlöcher abzulassen ist. Diese Verwendung der Litzenanker tritt beispielsweise bei Talsperrenmauern auf, die zu ertüchtigen sind. Hier sind die Litzenanker von einer Mauerkrone aus in nahezu vertikale Bohrlöcher einzubringen. - Die genannten Schwierigkeiten bestehen darin, daß wegen des begrenzten Biegeradius des liegend angelieferten Litzenankers dieser über eine auf einer Bühne befindlichen Rolle mit einem Durchmesser von mindestens ca. 5 m in das Bohrloch abgelassen werden muß. Infolge der teilweisen Umschlingung der Rolle entsteht auf dieser eine Längendifferenz zwischen äußeren und innenliegenden Litzen von beträchtlicher Länge. Deswegen besteht die Tendenz, daß sich das Litzenbündel innerhalb des Hüllrohres verdreht, was zu Schäden führen kann. Außerdem wird ein das Litzenbündel umschließendes Hüllrohr stark beansprucht. Wenn der Verankerungskörper werksmäßig hergestellt werden muß, ist dieser, bevor er in das Bohrloch eingelassen wird, zunächst in eine vertikale Lage zu bringen. Hierzu sind eine hohe Bühne sowie ein ausreichend dimensionierter Kran erforderlich.

Andere bekannte Lösungen zur Einbringung des Litzenankers in das Bohrloch, wie z.B. durch Hubschrauber, sind nicht immer praktikabel und oft unwirtschaftlich.

Der vorliegenden Erfindung liegt die Aufgabe zugrunde, das Verfahren zur Herstellung der Litzenanker und deren Transport zur Baustelle so zu verbessern, daß Schwierigkeiten bei der Einbringung der Litzenanker in das nahezu vertikale Loch, insbesondere infolge von Längendifferenzen zwischen äußeren und innenliegenden Litzen, vermieden werden, sowie eine hierzu geeignete Vorrichtung zu schaffen.

Die Verfahrensschritte, durch die sich das erfindungsgemäße Verfahren auszeichnet, sind im Anspruch 13 angegeben.

Das Wesen der Erfindung besteht darin, daß zwar der Verankerungskörper bzw. Verpreßkörper baustellenfern hergestellt wird, jedoch noch keine Bündelung und Abstandshaltung der einzelnen Litzen erfolgt. Dadurch kann der Verpreßkörper verhältnismäßig einfach mit einem Kran aufgerichtet werden, ohne das Litzenbündel zu verdrehen oder zu verschieben. Die Litzenbündel werden erst beim Ablassen des Verankerungskörpers in das Bohrloch gebündelt und mit Abstandhaltern versehen. Dies setzt allerdings ein verhältnismäßig hohes Gerüst mit einer Führungsrolle, über welche die Litzen gelegt werden, voraus. - Durch die Anordnung der Haspeln in dem kastenförmigen, weitgehend geschlossenen Gerüst wird die Handhabung der Haspeln und Litzen wesentlich vereinfacht.

Da für den Fall, daß die Freispielstrecke des Litzenankers durch ein Hüllrohr zu schützen ist, dieses Hüllrohr nicht ab Werk bzw. vorab über den fertig gebündelten Litzenanker gezogen werden kann, ist in Weiterbildung des Verfahrens nach Anspruch 14 vorgesehen, daß der fertig gebündelte Litzenanker auf der Baustelle mit einem Hüllrohr ummantelt wird, indem Hüllrohr-Halbschalen miteinander verschweißt werden. Dadurch werden Schwierigkeiten vermieden, die insbesondere dann auftreten können, wenn lange Litzenanker mit einem Hüllrohr überzogen werden.

Eine besonders geeignete Vorrichtung zur Ausübung des erfindungsgemäßen Verfahrens bzw. zum Transport von Litzenankern, deren Litzen auf Haspeln aufgewickelt sind, sowie zum Einbringen der Litzenanker in Bohrlöcher ist in dem kennzeichnenden Teil des Anspruchs 1 angegeben.

Da der Verankerungskörper und die Haspeln mit den einzelnen Litzen bereits im Werk in dem vorgesehenen transportablen Gerüst geschützt befestigt werden, das sodann bis zu der Baustelle, insbesondere dem vertikalen Bohrloch, transportiert und dort aufgestellt wird, brauchen der starre Verankerungskörper und das Litzenbündel vom Werk bis unmittelbar zum Ablassen in das Bohrloch nicht umgesetzt zu werden. - Das Gerüst dient nicht nur zum Transport des Verankerungskörpers und der Litzen, sondern auch zum Absenken des fertigen Litzenankers. Hierzu kann das Gerüst turmartig aufgerichtet werden, und die in dem Gerüst integrierte Umlenkrolle dient zum Umlenken der einzelnen Litzen zu dem herabhängenden Verankerungskörper. Das Gerüst ist annähernd kastenförmig.

Im einzelnen können für einen 36-Litzen-Anker jeweils drei Haspeln nach Anspruch 2 unmittelbar nebeneinanderliegend angeordnet sein. Die Haspeln sind mit einer Bremse versehen, damit sich die einzelnen Litzen nicht vor der Fertigstellung des Litzenankers selbst entrollen.

Dadurch, daß der Verankerungskörper nach Anspruch 3 unmittelbar neben den Haspeln liegend angeordnet ist, laufen die Litzen verhältnismäßig spitzwinklig auf den Verpreßkörper zu, so daß die Litzen nicht stark beansprucht werden.

Insbesondere für den 36-Litzen-Anker wurde ein Haspeldurchmesser gemäß Anspruch 5 von 1,20 m gewählt. Der Haspeldurchmesser kann in dem in Anspruch 4 angegebenen Bereich liegen. Oft wird aus Handhabungs- und Raumgründen ein möglichst kleiner Haspeldurchmesser gewünscht. Zu einer raumsparenden geschützten Unterbringung des Verankerungskörpers, an dem die Litzen spitzwinklig auf den Verpreßkörper zulaufen, ist der Durchmesser der Umlenkrolle ungefähr so groß wie derjenige der Haspeln dimensioniert.

Zu den Vorteilen des bis hierher geschilderten Gerüsts gehört, daß der Verpreßkörper bzw. der Verankerungskörper problemlos sowohl in vertikaler als auch in horizontaler Lage werkseitig hergestellt werden kann. Dabei ist der Verankerungskörper bereits an der Traverse befestigt. Er braucht erst unmittelbar am Bohrloch wieder gelöst zu werden. Die Litzen bleiben bis zur Absenkung des Verpreßkörpers in das Bohrloch aufgerollt, sie brauchen also auch auf der Baustelle zu keinem Zeitpunkt entrollt und ausgelegt zu werden, um den Litzenanker fertigzustellen. Dies bedeutet eine erhebliche Platzersparnis, die insbesondere erwünscht ist, wenn sich die Baustelle auf einer schmalen Dammkrone befindet.

Zum Transport des vorbereiteten Litzenankers zwischen Werk und Baustelle dient das Gerüst als kompakte Einheit, die in der Art eines Containers auf einem Lkw oder der Bahn transportiert werden kann.

An der Baustelle kann das Gerüst entweder von dem Lkw abgenommen und direkt zu einem Bohrloch gefahren oder gehoben werden und dort z.B. mit Winden aufgerichtet werden oder aber die Traverse verbleibt zunächst auf dem Lkw und wird direkt am Bohrloch mittels eines Hubzylinders aufgerichtet. Im Unterschied zu den bekannten Bühnen mit je einer Führungsrolle ist das Gerüst sehr kompakt und beweglich. Darüber hinaus befindet es sich nur temporär auf der Baustelle, da der Litzenanker möglichst schnell nach Fertigstellung des Bohrlochs in dieses eingebracht werden soll. Das Gerüst beansprucht also nicht nutzlos Platz auf der Baustelle, sondern kann zur Anfertigung des nächsten Litzenankers direkt wieder herangezogen werden.

In den Ansprüchen 9, 10 und 12 sind weitere vorteilhafte Merkmale der Vorrichtung angegeben, welche einen an das Gerüst angepaßten Lastkraftwagen betreffen.

Ein Ausführungsbeispiel des Lastkraftwagens und des hierauf gelagerten Gerüsts sind in der Zeichnung mit zwei Figuren angegeben. Es zeigen:
- Fig. 1: einen Lastkraftwagen mit dem Gerüst in verschiedenen Schwenkstellungen in einer Seitenansicht und
- Fig. 2: eine Draufsicht auf das von dem Lastkraftwagen gelöste Gerüst, jeweils mit dem vorbereiteten Litzenanker.

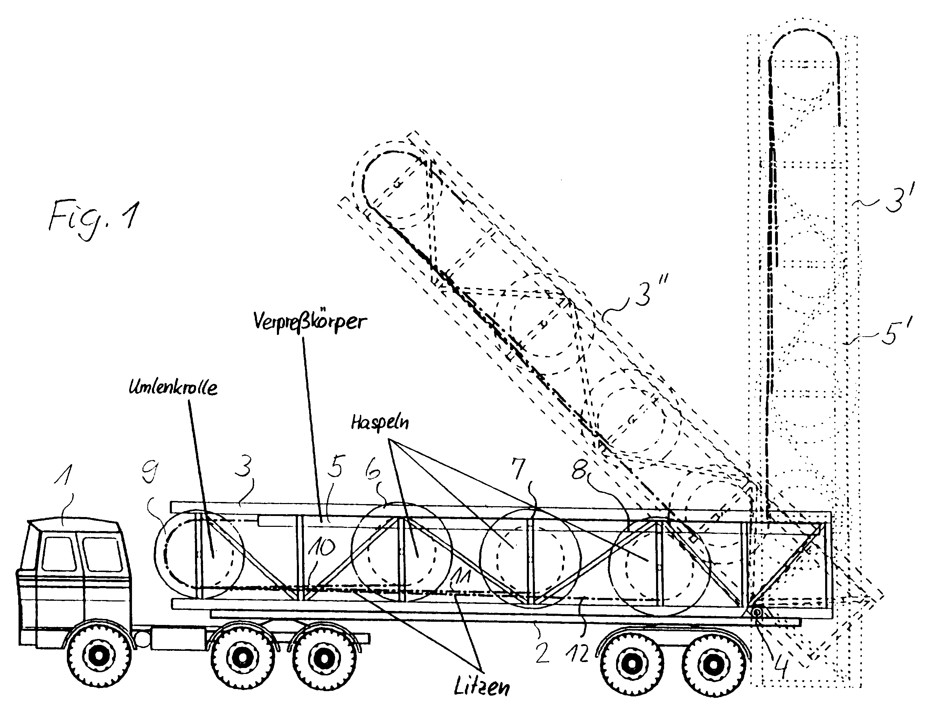

In Fig. 1 ist mit 1 eine Zugmaschine eines Sattelschleppers bezeichnet, auf dessen Anhänger 2 ein kastenförmiges Gerüst 3 gelagert ist. Das Gerüst kann um eine Schwenkachse 4 aus einer horizontalen Transportstellung in eine vertikale Stellung und zurück geschwenkt werden. In der vertikalen Stellung ist das mit unterbrochenen Linien gezeichnete Gerüst mit 3' bezeichnet und in einer Zwischenstellung mit 3''. Das Gerüst kann sich sowohl zur Herstellung eines Verankerungskörpers bzw. Verpreßkörpers 5, 5' als auch zum Ablassen des den Verankerungskörper umfassenden Litzenankers in ein nicht gezeichnetes Bohrloch auf der Baustelle in der vertikalen Stellung befinden.

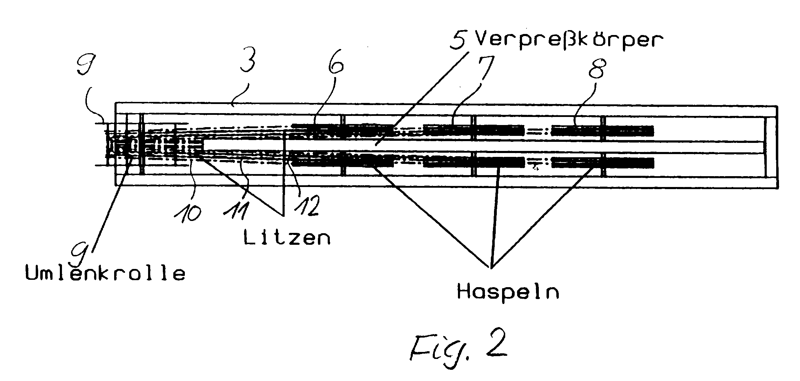

Wie aus Fig. 1 und Fig. 2, in welcher das Gerüst 3 in der horizontalen Lage in einer Draufsicht dargestellt ist, ersehen werden kann, befinden sich in dem kastenförmigen Gerüst dicht nebeneinanderliegend, jedoch in der Höhenlage geringfügig versetzt, drei Haspeln 6, 7, 8, damit die Litzen ohne gegenseitige Reibung störungsfrei gebündelt werden können. Von den Haspeln laufen einzelne Litzen über eine Umlenkrolle 9 zu dem Verpreßkörper 5. Die Umlenkrolle ist dabei an dem zu der Schwenkachse 4 entgegengesetzten Ende des Gerüsts in dieser gelagert. Es sei noch bemerkt, daß die Haspeln 6, 7, 8 jeweils mit einer nicht dargestellten Bremse zusammenwirken, damit die Haspeln arretiert werden können, solange der Litzenanker nicht in das Bohrloch abgelassen wird. Drei einzelne Litzen sind mit 10, 11, 12 bezeichnet; der Litzenanker kann jedoch aus mehr Einzellitzen zusammengesetzt werden, wie insbesondere Fig. 2 zeigt.

Weitere Merkmale des Gerüsts und des zugehörigen Lastkraftwagens sind in dem allgemeinen Teil der Beschreibung angegeben. Dies gilt auch für das Verfahren zum Transport des Litzenankers, der den Ankerkörper 5 sowie Einzellitzen, z.B. 10, 11, 12, umfaßt, sowie zu dessen Herstellung, die teilweise dem Transport vorangeht, jedoch erst nach dem Transport zur Baustelle vollendet wird.

Die Litzen sind bevorzugt auf Haspeln gewickelt, deren Umfang offen ist, sie können jedoch auch auf außen weitgehend geschlossenen, üblichen Pellets aufgebracht sein.

## Patentansprüche

1. Vorrichtung zum Transport von Litzenankern, deren Litzen auf Haspeln aufgewickelt sind, sowie zum Einbringen der Litzenanker in Bohrlöcher,
**dadurch gekennzeichnet,**
daß ein transportables kastenförmiges Gerüst (3) vorgesehen ist, welches von einer horizontalen Transportlage in eine annähernd vertikale Position schwenkbar ist und in dem der Verankerungskörper bzw. Verpreßkörper (5) neben bzw. über den Haspeln (6,7,8) mit den Litzen lösbar befestigt ist, in dem die mit einer Bremse versehenen Haspeln (6,7,8) drehbar gelagert sind und in dem eine Umlenkrolle (9) gelagert ist, über welche die Litzen (10,11,12) zwischen dem Verankerungskörper (5) und den Haspeln (6,7,8) laufen.

2. Vorrichtung nach Anspruch 1,
**dadurch gekennzeichnet,**
daß drei Haspeln (6,7,8) unmittelbar hintereinanderliegend auf dem Gerüst (3) angeordnet sind.

3. Vorrichtung nach Anspruch 1 oder 2,
**dadurch gekennzeichnet,**
daß der Verankerungskörper (5) unmittelbar neben den Haspeln (6, 7, 8) liegend angeordnet ist.

4. Vorrichtung nach einem der Ansprüche 1 bis 3,
**dadurch gekennzeichnet,**
daß der Haspeldurchmesser in dem Bereich von 0,90 m bis 1,60 m liegt.

5. Vorrichtung nach Anspruch 4,
**dadurch gekennzeichnet,**
daß der Haspeldurchmesser 1,20 m beträgt.

6. Vorrichtung nach einem der vorangehenden Ansprüche,
**dadurch gekennzeichnet,**
daß der Durchmesser der Umlenkrolle (9) ungefähr so groß wie derjenige der Haspeln (6, 7, 8) ist.

7. Vorrichtung nach einem der vorangehenden Ansprüche,
**dadurch gekennzeichnet,**
daß das Gerüst (3) in der Art eines Containers auf einem Lastkraftwagen (1, 2) transportierbar ist.

8. Vorrichtung nach einem der vorangehenden Ansprüche,
**dadurch gekennzeichnet,**
daß das Gerüst (3) in der Art eines Containers auf einem Güterwagen transportierbar ist.

9. Vorrichtung nach Anspruch 7,
**dadurch gekennzeichnet,**
daß das Gerüst (3) auf dem Lastkraftwagen (1, 2) aus einer horizontalen Transportlage in eine angenähert vertikale Position schwenkbar ist.

10. Vorrichtung nach Anspruch 9,
**dadurch gekennzeichnet,**
daß das Gerüst (3) im Bereich der hinteren Ladekante des Lastkraftwagens um eine annähernd horizontale Schwenkachse (4) schwenkbar gelagert ist.

11. Vorrichtung nach Anspruch 9 oder 10,
**dadurch gekennzeichnet,**
daß das Gerüst durch einen Hubzylinder aufrichtbar ist.

12. Vorrichtung nach Anspruch 10,
**dadurch gekennzeichnet,**
daß der Hubzylinder einerseits an dem Kraftfahrzeug (1, 2) und andererseits an einer der Schwenkachse entfernten Stelle des Gerüsts angreift.

13. Verfahren zur Herstellung von Litzenankern und zu deren Transport zur Baustelle, bei dem die Litzen auf Haspeln aufgewickelt sind,
**dadurch gekennzeichnet,**
daß eine Vorverpressung der Verankerungsstrecke, nicht jedoch eine Bündelung einer Freispielstrecke werksmäßig erfolgt, daß ein durch die Vorverpressung der Verankerungsstrecke hergestellter Verpreßkörper mit anhängenden, einzelnen auf den Haspeln aufgewickelten Litzen mittels einer Vorrichtung nach einem der Ansprüche 1-12 zur Baustelle transportiert wird und daß die Freispielstrecke der Litzenanker erst beim Ablassen in ein Loch gebündelt und mit Abstandhaltern versehen wird.

14. Verfahren nach Anspruch 13,
**dadurch gekennzeichnet,**
daß der fertig gebündelte Litzenanker auf der Baustelle mit einem Hüllrohr ummantelt wird, indem Hüllrohr-Halbschalen miteinander verschweißt werden.

## Claims

1. Apparatus for transporting stranded anchors, the strands of which are wound onto coilers as well as for inserting the stranded anchor into drilled holes, characterized in that a transportable box-type frame (3) is provided which can be swivelled from a horizontal transporting position into an approximately vertical position and in which the anchoring body or pressed body (5) is attached to the strands next to or over the coilers (6,7,8) in a detachable manner, in which the coilers (6,7,8) provided with a brake are rotatably mounted and in which a guide roll (9) is mounted, over which the strands (10,11,12) run between the anchoring body (5) and the coilers (6,7,8).

2. Apparatus according to claim 1, characterized in that three coilers (6,7,8) are disposed immediately one behind the other on the frame (3).

3. Apparatus according to claim 1 or 2, characterized in that the anchoring body (5) is disposed so that it lies immediately next to the coilers (6,7,8).

4. Apparatus according to one of claims 1 to 3, characterized in that the coiler diameter is in the range of 0.90 m to 1.60 m.

5. Apparatus according to claim 4, characterized in that the coiler diameter is 1.20 m.

6. Apparatus according to one of the preceding claims, characterized in that the diameter of the guide roll (9) is approximately as large as that of the coilers (6,7,8).

7. Apparatus according to one of the preceding claims, characterized in that the frame (3) can be transported in the manner of a container on a lorry (1,2).

8. Apparatus according to one of the preceding claims, characterized in that the frame (3) can be transported in the manner of a container on a goods truck.

9. Apparatus according to claim 7, characterized in that the frame (3) on the lorry (1,2) can be swivelled out of a horizontal transportation position into an approximately vertical position.

10. Apparatus according to claim 9, characterized in that the frame (3) is mounted in the area of the rear loading edge of the lorry so that it can be swivelled about an approximately horizontal swivel shaft (4).

11. Apparatus according to claim 9 or 10, characterized in that the frame can be raised by a lifting cylinder.

12. Apparatus according to claim 10, characterized in that the lifting cylinder is attached on the one hand to the motor vehicle (1,2) and on the other hand to a point on the frame which is at a distance from the swivel shaft.

13. Method of assembling stranded anchors and transporting them to the construction site with the strands bein wound onto coilers, characterized in that a preliminary pressing of the anchoring stretch but not a bunching of a stretch with free play is carried out in the works, in that a pressed body produced by the preliminary pressing of the anchoring stretch with attached strands wound onto the coilers by means of an apparatus according to one of claims 1-12 is transported to the construction site and in that the free play stretch of the stranded anchors is not bunched in a hole and provided with range spacers until it is drawn off.

14. Method according to claim 13, characterized in that the finished bunched stranded anchor is encased with a casing tube on the construction site so that the casing tube-half shells are welded to each other.

## Revendications

1. Dispositif pour le transport d'ancrages toronnés dont les torons sont enroulés sur des dévidoirs ainsi que pour la mise en place des ancrages toronnés dans des trous de forage,
caractérisé en ce
qu'un échafaudage transportable en forme de caisson (3) est prévu qui est pivotable d'une position de transport horizontale en une position approximativement verticale et dans lequel le corps d'ancrage ou encore le corps d'injection (5) est fixé de manière amovible prés ou au-dessus des dévidoirs (6, 7, 8) avec les torons, dans lequel les dévidoirs (6, 7, 8) pourvus d'un frein sont positionnés rotatifs et dans lequel une poulie de déviation (9) est positionnée par laquelle les torons (10, 11, 12) passent entre le corps d'ancrage (5) et les dévidoirs (6, 7, 8).

2. Dispositif selon la revendication 1,
caractérisé en ce
que trois dévidoirs (6, 7, 8) sont placés directement l'un derrière l'autre sur l'échafaudage (3).

3. Dispositif selon la revendication 1 ou 2,
caractérisé en ce
que le corps d'ancrage (5) est placé à plat directement à côté des dévidoirs (6, 7, 8).

4. Dispositif selon l'une des revendications 1 à 3,
caractérisé en ce
que le diamètre des dévidoirs est de l'ordre de 0,90 m à 1,60 m.

5. Dispositif selon la revendication 4,
caractérisé en ce
que le diamètre des dévidoirs est 1,20 m.

6. Dispositif selon l'une des revendications précédentes,
caractérisé en ce
que le diamètre de la poulie de déviation (9) est environ aussi grand que celui des dévidoirs (6, 7, 8).

7. Dispositif selon l'une des revendications précédentes,
caractérisé en ce
que l'échafaudage (3) peut être transporté à la manière d'un conteneur sur un camion (1, 2).

8. Dispositif selon l'une des revendications précédentes,
caractérisé en ce
que l'échafaudage (3) peut être transporté à la manière d'un conteneur dans un wagon à marchandises.

9. Dispositif selon la revendication 7,
caractérisé en ce
que l'échafaudage (3) sur le camion (1, 2) est pivotable d'une position de transport horizontale à une position approximativement verticale.

10. Dispositif selon la revendication 9,
caractérisé en ce
que l'échafaudage (3) est positionné pivotant autour d'un axe de pivotement (4) approximativement horizontal dans la zone de l'arête de chargement arrière du camion.

11. Dispositif selon la revendication 9 ou 10,
caractérisé en ce
que l'échafaudage peut être redressé par un cylindre de levage.

12. Dispositif selon la revendication 10,
caractérisé en ce
que le cylindre de levage attaque d'une part sur le véhicule (1, 2) et d'autre part à un endroit de l'échafaudage éloigné de l'axe de pivotement.

13. Procédé pour la fabrication d'ancrages toronnés et pour leur transport au chantier pour lequel les torons sont enroulés sur des dévidoirs,
caractérisé en ce
qu'une préinjection du tronçon d'ancrage est effectuée à l'usine, mais cependant pas une mise en botte d'un tronçon de jeu, qu'un corps d'injection fabriqué par la préinjection du tronçon d'ancrage avec des torons attachés, individuels, enroulés sur les dévidoirs est transporté au chantier au moyen d'un dispositif selon l'une des revendications 1 à 12 et que le tronçon de jeu des ancrages toronnés n'est mis en botte et est pourvu d'écarteurs que lors de la descente dans un trou.

14. Procédé selon la revendication 13,
caractérisé en ce
que l'ancrage toronné fini mis en botte est enrobé d'une gaine sur le chantier, des demi-coques de gaine étant soudées l'une à l'autre.
